# EUROPÄISCHE PATENTSCHRIFT

(11) **EP 3 766 330 B1**
(45) Veröffentlichungstag und Bekanntmachung des Hinweises auf die Patenterteilung: **26.06.2024**
(21) Anmeldenummer: 20162268.5
(22) Anmeldetag: 11.03.2020
(51) Int. Cl.: A01D 41/127, A01B 79/00

(54) **VERFAHREN ZUR ABARBEITUNG EINES LANDWIRTSCHAFTLICHEN ERNTEPROZESSES**
METHOD FOR IMPLEMENTING AN AGRICULTURAL HARVESTING PROCESS
PROCÉDÉ DE TRAITEMENT D'UN PROCESSUS DE RÉCOLTE AGRICOLE

(30) Priorität: 15.07.2019 DE 102019119106
(43) Veröffentlichungstag der Anmeldung: 20.01.2021
(73) Patentinhaber: CLAAS Selbstfahrende Erntemaschinen GmbH, 33428 Harsewinkel (DE)
(72) Erfinder: Bormann, Bastian, 33334 Gütersloh (DE); Baumgarten, Joachim, 48361 Beelen (DE); Neitemeier, Dennis, 59510 Lippetal (DE); Wilken, Andreas, 49143 Bissendorf (DE); Wellensiek, Scott, 33428 Harsewinkel (DE); Osterkamp, Matthias, 49088 Osnabrück (DE); Beermann, Ingo, 48291 Telgte (DE); Bußmann, Jens, 49179 Ostercappeln (DE); Terörde, Stefan, 48231 Warendorf (DE); Berger, Arthur, 49143 Bissendorf (DE)
(74) Vertreter: CLAAS Gruppe

(56) Entgegenhaltungen:
- EP-A1- 2 186 389
- EP-A1- 3 400 774
- CN-A- 109 936 975
- DE-A1-102008 019 018

## Beschreibung

Die Erfindung betrifft ein Verfahren zur Abarbeitung eines landwirtschaftlichen Ernteprozesses auf einem Feld mittels eines Verbunds aus landwirtschaftlichen Erntemaschinen gemäß dem Oberbegriff von Anspruch 1 sowie eine Erntemaschine zur Verwendung in einem solchen Verfahren gemäß Anspruch 14.

Bei abzuerntenden Feldern mit großen Ausdehnungen kommt oft ein Verbund aus landwirtschaftlichen Erntemaschinen zur Anwendung. Hier ist der optimale Betrieb jeder Erntemaschine des Verbunds von besonderer Bedeutung, um die Effizienz des Ernteprozesses insgesamt zu maximieren. Dies betrifft insbesondere die Arbeitsaggregate der Erntemaschinen, die jeweils der Verarbeitung von Erntegut dienen. Diese Arbeitsaggregate lassen sich zur Anpassung an die jeweiligen Erntebedingungen mit Maschinenparametern einstellen. Der Optimierung der Maschinenparameter kommt im Hinblick auf die angesprochene Effizienz des Ernteprozesses besondere Bedeutung zu.

Das bekannte Verfahren (EP 3 400 774 A1), von dem die Erfindung ausgeht, betrifft die Abarbeitung eines landwirtschaftlichen Ernteprozesses auf einem Feld mittels eines Verbunds aus landwirtschaftlichen Erntemaschinen, die über ein drahtloses Datennetzwerk miteinander kommunizieren. Dabei ist vorgesehen, dass eine Master-Erntemaschine selbstoptimierend ausgestaltet ist, optimierte Maschinenparameter erzeugt und diese über das drahtlose Datennetzwerk Slave-Erntemaschinen zur Verfügung stellt. Die nicht selbstoptimierenden Slave-Erntemaschinen übernehmen die optimierten Maschinenparameter somit unbesehen. Dieses Verfahren weist bei quasi identisch ausgestalteten Erntemaschinen eine hohe Effizienz aus. Sobald jedoch Abweichungen zwischen der Master-Erntemaschine und den Slave-Erntemaschinen vorhanden sind, werden diese nicht ausreichend berücksichtigt, da die Slave-Erntemaschinen einfach auf die optimierten Maschinenparameter der Master-Erntemaschine eingestellt werden. So bleibt weiterhin jeder Fahrer einer Slave-Erntemaschine in der Verantwortung, seine Erntemaschine teilweise selbst zu optimieren, ohne hierfür die notwendigen technischen Hilfsmittel zur Hand zu haben.

Die nachveröffentlichte deutsche Patentanmeldung DE 10 2018 113 327.8 offenbart ein Verfahren zur übergeordneten Flottensteuerung eines Verbunds aus landwirtschaftlichen Erntemaschinen, im Rahmen dessen auch die vorschlagsgemäße Lehre Anwendung finden kann.

Der Erfindung liegt das Problem zu Grunde, das bekannte Verfahren derart auszugestalten und weiterzubilden, dass die Abarbeitung landwirtschaftlicher Ernteprozesse bei, insbesondere heterogenen, Verbünden aus landwirtschaftlichen Erntemaschinen optimiert wird.

Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Erkenntnis, dass neben optimierten Maschinenparametern auch Benutzervorgaben und/oder Parametereinstellungen umfassende Optimierungsdaten von der Master-Erntemaschine übertragen werden können. Es ist insofern wesentlich, dass diese Optimierungsdaten gerade jene Optimierungsdaten sind, auf Basis derer die optimierten Maschinenparameter erzeugt werden. Der Fahrer der Master-Erntemaschine, der diese Vorgaben üblicherweise regelmäßig anpasst, ist gleichzeitig derjenige Fahrer, der die beste technische Ausstattung seiner Erntemaschine vorweisen kann. Somit ist es diesem Fahrer möglich, Entscheidungen für den gesamten Verbund in Kooperation mit seinem Fahrerassistenzsystem zu treffen. Seitens der Slave-Erntemaschinen können dann zumindest teilweise die optimierten Maschinenparameter direkt übernommen und teilweise, auf Basis einer vorgegebenen Gesamtstrategie, weitere Optimierungen vorgenommen werden.

Im Einzelnen wird vorgeschlagen, dass von der Master-Erntemaschine Optimierungsdaten, die Benutzervorgaben und/oder Parametereinstellungen umfassen, und auf Basis der Optimierungsdaten vom Optimierungssystem erzeugte optimierte Maschinenparameter über das Datennetzwerk bereitgestellt und von Slave-Erntemaschinen des Verbunds empfangen werden.

Dabei werden zumindest die optimierten Maschinenparameter an die jeweilige Slave-Erntemaschine angepasst. Da nicht alle Slave-Erntemaschinen identisch zur Master-Erntemaschine ausgestaltet sind, können diverse Maschinenparameter, die bei der Master-Erntemaschine optimal sind, bei den Slave-Erntemaschinen wenig effizient oder gar sinnlos sein. Häufig ist jedoch das Funktionsprinzip der Erntemaschinen ähnlich genug, um die Maschinenparameter ohne eigene Optimierungsleistung anzupassen.

Die ebenso bevorzugte Ausgestaltung gemäß Anspruch 2 betrifft eine Plausibilitätsprüfung der Optimierungsdaten und/oder der optimierten Maschinenparameter, wodurch sichergestellt werden kann, dass unzulässige oder widersprüchliche Einstellungen rechtzeitig bemerkt und eventuelle Probleme behoben werden können.

Die Ausgestaltung gemäß Anspruch 3 betrifft einen Verbund, in dem auch mindestens eine Slave-Erntemaschine selbstoptimierend ausgestaltet ist. Diese Slave-Erntemaschine ist dabei mit einem Optimierungssystem ausgestattet, das eine geringere Wertigkeit bezüglich seiner Ausstattung aufweist, als das Optimierungssystem der Master-Erntemaschine. Es kann somit vorgesehen sein, dass beispielsweise bei der Slave-Erntemaschine nur zu einem Teil der Arbeitsaggregate optimierte Maschinenparameter erzeugt werden. Gerade, wenn, die Erntemaschinen des Verbunds als Mähdrescher oder Feldhäcksler ausgestaltet sind, weist die Summe der möglichen Optimierungen eine hohe Komplexität auf. Entsprechend können die Optimierungssysteme nach einer Ausgestaltung gemäß Anspruch 4 modular aufgebaut sein. In diesem Fall ist ein übergeordnetes Fahrerassistenzsystem mit untergeordneten Sub-Modulen bevorzugt. Das Fahrerassistenzsystem kann dann zur Koordination der Sub-Module dienen.

Anspruch 5 gibt bevorzugte Ausführungsformen der Parametereinstellungen und Benutzervorgaben an.

Bei den Ausgestaltungen gemäß der Ansprüche 6 und 7 umfassen die Optimierungsdaten weiterhin Sensordaten und/oder Bestandsbedingungen. Diese müssen somit nur von der Master-Erntemaschine ermittelt oder empfangen werden und können trotzdem in die Optimierung des gesamten Verbunds einfließen.

Sofern zumindest eine Slave-Erntemaschine als selbstoptimierende Erntemaschine ausgestaltet ist, optimiert diese vorzugsweise einen ersten Teil ihrer Arbeitsaggregate selbst und nutzt für einen zweiten Teil ihrer Arbeitsaggregate die von der Master-Erntemaschine erzeugten und übertragenen optimierten Maschinenparameter. Bei entsprechender Ausstattung der Slave-Erntemaschinen mit Sub-Modulen kann somit bestenfalls jede Slave-Erntemaschine genau den Teil ihrer Arbeitsaggregate optimieren, für den die Optimierung der Master-Erntemaschine nicht ausreichend oder nicht effizient genug ist.

Die bevorzugte Ausgestaltung gemäß Anspruch 8 betrifft die Normierungsvorschriften. Diese müssen vorzugsweise nicht bei jedem Verbund und jeder neunen Slave-Erntemaschine und/oder Master-Erntemaschine neu erzeugt werden, sondern können gespeichert und geladen werden.

Gemäß Anspruch 9 kann die Normierungsroutine von der Master-Erntemaschine oder der jeweiligen Slave-Erntemaschine durchgeführt werden.

Die Ausgestaltungen der Ansprüche 10 und 11 betreffen die bevorzugt tätigbaren Benutzervorgaben und Parametereinstellungen.

Nach einer weiteren Lehre gemäß Anspruch 12 der eigenständige Bedeutung zukommt, wird eine Erntemaschine zur Verwendung in einem vorschlagsgemäßen Verfahren beansprucht. Auf alle Ausführungen, die geeignet sind, die Erntemaschine als solche oder ihre Verwendung zu beschreiben, darf verwiesen werden.

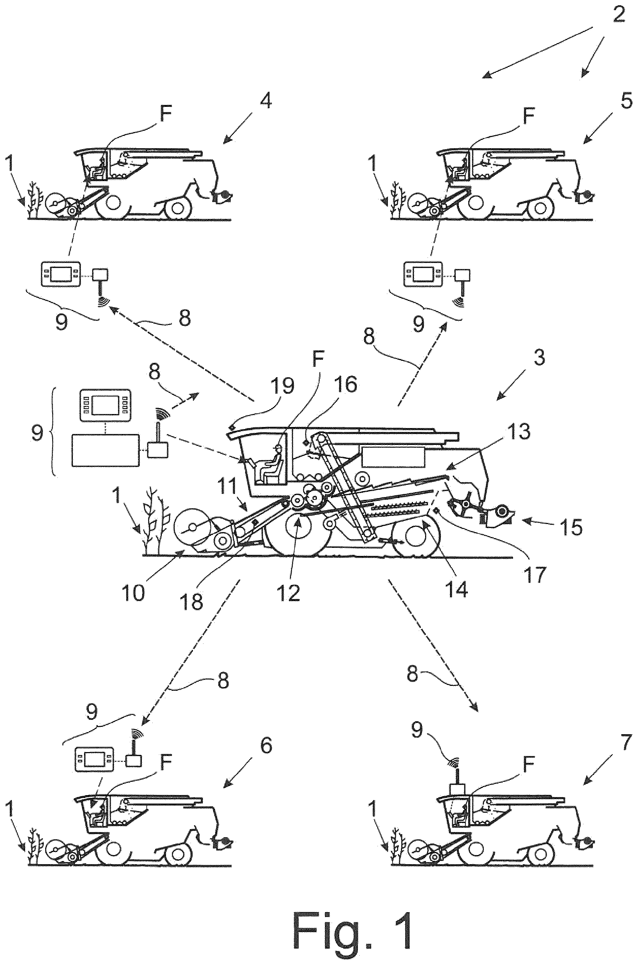

Im Folgenden wird die Erfindung anhand einer lediglich ein Ausführungsbeispiel darstellenden Zeichnung näher erläutert. In der Zeichnung zeigt
- Fig. 1: einen Verbund aus landwirtschaftlichen Erntemaschinen, die einen landwirtschaftlichen Ernteprozess auf einem Feld nach einem vorschlagsgemäßen Verfahren abarbeiten.

Das vorschlagsgemäße Verfahren ist auf die Abarbeitung eines landwirtschaftlichen Ernteprozesses auf einem Feld 1 mittels eines Verbunds 2 aus landwirtschaftlichen Erntemaschinen 3 - 7 gerichtet, wobei die Erntemaschinen 3 - 7 des Verbunds 2 jeweils Erntegut verarbeitende Arbeitsaggregate aufweisen, die zur Anpassung an die jeweiligen Erntebedingungen mit Maschinenparametern einstellbar sind. Der Begriff "Verbund" bezieht sich dabei auf mehrere landwirtschaftliche Erntemaschinen 3 - 7, die zur Abarbeitung des Ernteprozesses im weitesten Sinne zusammenarbeiten.

Die Erntemaschinen 3 - 7 des Verbunds 2 kommunizieren über ein drahtloses Datennetzwerk 8 miteinander. Hier und vorzugsweise setzt sich das Datennetzwerk 8 aus funkbasierten Punkt-zu-Punkt-Verbindungen zusammen. Denkbar ist aber auch, dass das Datennetzwerk 8 zumindest zum Teil über ein Mobilfunknetz realisiert ist.

Hervorzuheben ist bei dem in Fig. 1 dargestellten, bevorzugten Verbund 2, dass genau einer Erntemaschine, der Master-Erntemaschine 3, eine herausragende Stellung zukommt. Dies liegt daran, dass diese Master-Erntemaschine 3 des Verbunds 2 als selbstoptimierende Erntemaschine ausgestaltet ist, die ein, ein Fahrerassistenzsystem umfassendes, Optimierungssystem 9 zur automatisierten Erzeugung von hinsichtlich der Erntegutverarbeitung optimierten Maschinenparametern aufweist.

Das Optimierungssystem 9 verfügt vorzugsweise über eine Rechenvorrichtung, auf der eine Software für die automatisierte Erzeugung von optimierten Maschinenparametern abläuft.

Wesentlich ist nun, dass von der Master-Erntemaschine 3 Optimierungsdaten, die Benutzervorgaben und/oder Parametereinstellungen umfassen, und auf Basis der Optimierungsdaten vom Optimierungssystem erzeugte optimierte Maschinenparameter über das Datennetzwerk 8 bereitgestellt und von Slave-Erntemaschinen 4 - 7 des Verbunds 2 empfangen werden.

Somit besteht für die Slave-Erntemaschinen 4 - 7 die Möglichkeit, sowohl Benutzervorgaben und Parametereinstellungen als auch optimierte Maschinenparameter der Master-Erntemaschine 3 zu verwenden. Vorzugsweise verwenden auch alle Slave-Erntemaschinen 4 - 7 zumindest optimierte Maschinenparameter der Master-Erntemaschinen 3 zur Einstellung ihrer Arbeitsaggregate. Weiter vorzugsweise verwenden zumindest einige der Slave-Erntemaschinen 4 - 7 die Optimierungsdaten zur Erstellung optimierter Maschinenparameter für ihre Arbeitsaggregate.

Die Details der Optimierungsdaten sowie ihrer Verwendung sowohl bei der Master-Erntemaschine 3 als auch den Slave-Erntemaschinen 4 - 7 werden im Folgenden noch näher erläutert. Es wurde erkannt, dass die optimierten Maschinenparameter der Master-Erntemaschine 3 nicht immer für alle Slave-Erntemaschinen 4 - 7 direkt übernommen werden können. Es ist vorzugsweise so, dass in einer Normierungsroutine basierend auf Normierungsvorschriften zumindest die optimierten Maschinenparameter an die jeweilige Slave-Erntemaschine 4 - 7 angepasst werden.

Es darf an dieser Stelle darauf hingewiesen werden, dass ein Verbund 2 vorschlagsgemäß genau eine Master-Erntemaschine 3 aufweist. Dies schließt jedoch nicht aus, dass sich beispielsweise mehrere Verbünde 2 auf einem Feld 1 befinden. Diese mehreren Verbünde 2 müssen dabei auch nicht voneinander isoliert sein. Das vorschlagsgemäße Verfahren kann insofern auch bei einer Zusammenarbeit von mehreren Verbünden 2 für die jeweiligen Verbünde 2 Anwendung finden.

Welche Optimierungsdaten und welche optimierten Maschinenparameter genau von der Master-Erntemaschine 3 bereitgestellt werden, kann vorzugsweise für jede Slave-Erntemaschine 4 - 7 einzeln von einem Benutzer ausgewählt werden. Diese Auswahl kann zum Beispiel in Abhängigkeit von einer Ausstattung der jeweiligen Slave-Erntemaschine 4 - 7 und einer Gesamtstrategie des landwirtschaftlichen Ernteprozesses abhängen. Der Benutzer kann ganz allgemein ein Fahrer F einer der Erntemaschinen 3 - 7 sein, aber auch beispielsweise ein Verbundsmanager.

Es kann vorgesehen sein, dass die Optimierungsdaten und/oder die optimierten Maschinenparameter durch das Optimierungssystem 9 der jeweiligen Slave-Erntemaschine 4 - 6 und/oder durch das Optimierungssystem 9 der Master-Erntemaschine 3 auf Basis weiterer Optimierungsdaten der jeweiligen Slave-Erntemaschine 4 - 7, insbesondere auf Basis von Grenzwerten für Betriebsbedingungen der jeweiligen Slave-Erntemaschine 4 - 7, auf Plausibilität überprüft werden.

Es kann vorkommen, dass optimierte Maschinenparameter oder auch ganz allgemein Optimierungsdaten, die bei der Master-Erntemaschine 3 zu einem effizienten Betrieb führen, bei einer Slave-Erntemaschine 4 - 7 zu einem problematischen oder sogar schädigenden Betriebszustand führen. Um dies zu vermeiden, sind Erntemaschinen ganz allgemein üblicherweise mit Grenzwerten für ihre Betriebsbedingungen ausgestattet.

Stellt sich bei der Prüfung der Plausibilität heraus, dass eine bestimmte Einstellung nicht vorgenommen werden darf, kann dieses Problem häufig nur von einem Fahrer F behoben werden. Entsprechend ist es vorzugsweise so, dass bei fehlender Plausibilität einem Fahrer F der jeweiligen Slave-Erntemaschine 4 - 7 und/oder einem Fahrer F der Master-Erntemaschine 3 die fehlende Plausibilität angezeigt wird. In der bevorzugten Ausführungsform kann der Fahrer eine Einstellung der jeweiligen Arbeitsaggregate basierend auf den unplausiblen optimierten Maschinenparametern bestätigen oder ablehnen.

Eine besonders bevorzugte Ausgestaltung des vorschlagsgemäßen Verfahrens sieht vor, dass zumindest eine Slave-Erntemaschine 4 - 6 des Verbunds 2 als selbstoptimierende Slave-Erntemaschine 4 - 6 mit einem Optimierungssystem 9 ausgestaltet ist. Auf Basis der Erkenntnis, dass nicht alle optimierten Maschinenparameter von allen Slave-Erntemaschinen 4 - 7 einfach übernommen werden können, ergibt sich, dass es vorteilhaft ist, wenn diese in der Lage sind, zumindest Teile ihrer Arbeitsaggregate selbst zu optimieren. Es ist vorschlagsgemäß jedoch gerade nicht so, dass alle Slave-Erntemaschinen 4 - 6 des Verbunds 2 mit einem Optimierungssystem ausgestattet sind, das dem der Master-Erntemaschine 3 gleichwertig ist. Stattdessen ist es so, dass zumindest die Optimierungssysteme 9 zweier der selbstoptimierenden Erntemaschinen 3 - 6 des Verbunds 2 eine unterschiedliche Wertigkeit bezüglich ihrer Ausstattung aufweisen. Es ist dann so, dass das Optimierungssystem 9 der Master-Erntemaschine 3 die höchste Wertigkeit aufweist. Somit steuert auch weiterhin diejenige Erntemaschine den Verbund, die hierfür objektiv die beste Ausstattung aufweist.

Um die übertragenen Optimierungsdaten, insbesondere die Benutzervorgaben, jeweils in optimierte Maschinenparameter umzuwandeln, weisen vorzugsweise sogar alle Slave-Erntemaschinen 3 - 7 ein Optimierungssystem 9 auf. Dabei ist es vorzugsweise so, dass das Optimierungssystem 9 zumindest einer Slave-Erntemaschine 4 - 6 mit Optimierungssystem 9, vorzugsweise das jeweilige Optimierungssystem 9 aller Slave-Erntemaschinen 4 - 6 mit Optimierungssystem 9, kein Fahrerassistenzsystem aufweist. Inwiefern ein Fahrerassistenzsystem in der bevorzugten Ausführungsform bei den Slave-Erntemaschinen 4 - 7 nicht notwendig ist, soll im Folgenden an der bevorzugten Ausführungsform der Erntemaschinen 3 - 7 des Verbunds 2 als Mähdrescher erläutert werden. Ganz allgemein ist das Fahrerassistenzsystem jenes System, das, insbesondere in Interaktion mit dem Fahrer F, die Gesamtfunktion der Erntemaschine optimiert.

Die Erntemaschinen 3 - 7 des Verbunds 2, die vorzugsweise als Mähdrescher ausgestaltet sind, weisen hier die Arbeitsaggregate Schneidwerk 10, Schrägförderer 11, Dreschwerk 12, Trennvorrichtung 13, Reinigungsvorrichtung 14 und Verteilvorrichtung 15 auf.

Grundsätzlich können hier aber auch alle anderen Arten von Erntemaschinen Anwendung finden. Insbesondere können die Erntemaschinen auch Feldhäcksler sein. Alle Ausführungen zu einer als Mähdrescher ausgestalteten Erntemaschine gelten für alle anderen Arten von Erntemaschinen entsprechend.

Die Erntemaschine 3 - 7 nimmt in ihrem frontseitigen Bereich das Schneidwerk 10 auf, welches in an sich bekannter Weise mit dem Schrägförderer 11 verbunden ist. Der den Schrägförderer 11 durchlaufende Erntegutstrom wird einem Dreschwerk 12 zugeführt und anschließend der Trennvorrichtung 13 zum Abscheiden der in dem Erntegutstrom enthaltenen frei beweglichen Körner übergeben. Der Trennvorrichtung 13 ist eine Reinigungsvorrichtung 14 nachgeschaltet, die mit einem nicht dargestellten Ober- und Untersieb ausgestattet ist. Der resultierende Strohanteil wird schließlich über die Verteilvorrichtung 15 auf dem Feld 1 verteilt.

Bezüglich der Optimierungssysteme 9 wird bevorzugt, dass die jeweiligen Optimierungssysteme 9 der Master-Erntemaschine 3 oder der selbstoptimierenden Slave-Erntemaschine 4 - 6 modular aufgebaut sind. Hierzu können die Optimierungssysteme 9 der selbstoptimierenden Erntemaschinen 3 - 7 ein Fahrerassistenzsystem als übergeordnetes Modul und untergeordnete Sub-Module aufweisen. Wie bereits erwähnt, weist jedoch vorzugsweise nur die Master-Erntemaschine ein Fahrerassistenzsystem auf. Wie erwähnt, ist das Fahrerassistenzsystem jenes System, das die Gesamtfunktion der Erntemaschine optimiert. Hierfür steuert das Fahrerassistenzsystem vorzugsweise die untergeordneten Sub-Module und koordiniert deren Aktivitäten. Die untergeordneten Sub-Module wiederum optimieren dann Subsysteme der Erntemaschinen. So kann es beispielsweise ein Sub-Modul geben, das für die Steuerung und Optimierung der Fahrbewegung der jeweiligen Erntemaschine zuständig ist und ein anderes Sub-Modul, das den Erntegutverarbeitungsprozess optimiert. Es könnte dann beispielsweise vorgesehen sein, dass einige oder alle Slave-Erntemaschinen 4 - 6 ein Sub-Modul zur Fahrsteuerung aufweisen, die Erntegutverarbeitung im engeren Sinne jedoch zentral von der Master-Erntemaschine 3 optimiert wird.

Die Master-Erntemaschine 3 ist hier als diejenige definiert, deren Optimierungssystem 9 die höchste Wertigkeit aufweist. Die Wertigkeit des jeweiligen Optimierungssystems 9 wird vorzugsweise basierend auf einer Anzahl an Modulen des jeweiligen Optimierungssystems 9 bestimmt. Zusätzlich oder alternativ kann ein Optimierungssystem 9, das ein Fahrerassistenzsystem aufweist, eine höhere Wertigkeit aufweisen, als ein Optimierungssystem 9, das kein Fahrerassistenzsystem aufweist.

Im Folgenden soll der Einfluss der Parametereinstellungen und der Benutzervorgaben auf den Verbund thematisiert werden. Die Parametereinstellungen umfassen vorzugsweise Grenzwerteinstellungen und/oder Einstellungen für eine Gutflusskontrolle und/oder eine Fahrgeschwindigkeitsregelung und/oder ein Häcksel- und Verteilsystem und/oder ein Spurführungssystem. Zusätzlich oder alternativ umfassen die Benutzervorgaben vorzugsweise Einstellungen des Fahrerassistenzsystems.

In einer besonders bevorzugten Ausführungsform umfassen die Benutzervorgaben auch abgeleitete Benutzereinstellungen, die das Fahrerassistenzsystem aus den Benutzervorgaben ermittelt. Diese abgeleiteten Benutzereinstellungen können dann die Sub-Module betreffen.

Vorzugsweise ermittelt das Fahrerassistenzsystem der Master-Erntemaschine 3 aus, insbesondere relativ abstrakten, Benutzervorgaben die abgeleiteten Benutzereinstellungen, mittels derer die Sub-Module dann optimierte Maschinenparameter ermitteln. Diese Benutzervorgaben können beispielsweise "Hohe-Qualität des Korns" oder "schnelle Abarbeitung des Ernteprozesses" sein. Dies kann vollständig von dem Optimierungssystem 9 der Master-Erntemaschine 3 durchgeführt werden. Vorzugsweise können auch die abgeleiteten Benutzereinstellungen zumindest teilweise an die Slave-Erntemaschinen 4 - 6 übertragen werden, deren Optimierungssysteme 9 dann eigene optimierte Maschinenparameter erzeugen. So kann der gesamte Verbund 2 auf einfachste Art und Weise eine gemeinsame Strategie der Master-Erntemaschine 3 umsetzen. Somit wird dem Umstand Rechnung getragen, dass eine einzelne Optimierung einzelner Arbeitsaggregate oder Subsysteme einer Erntemaschine andere Ergebnisse erzielt, als eine Gesamtoptimierung.

Die Erzeugung optimierter Maschinenparameter durch ein Optimierungssystem 9, insbesondere das Optimierungssystem 9 der Master-Erntemaschine 3, geht vorzugsweise basierend auf Sensordaten vonstatten. Hierfür ist dem Optimierungssystem 9 der jeweiligen selbstoptimierenden Erntemaschine mindestens ein Sensor 16, 17 zur Überwachung der Erntegutverarbeitung und/oder mindestens ein Sensor 18, 19 zur Vorfeldüberwachung zugeordnet, wobei das Optimierungssystem 9 basierend auf den Sensormesswerten die optimierten Maschinenparameter ermittelt. Bei dem Sensor 16, 17 zur Überwachung der Erntegutverarbeitung handelt es sich am Beispiel eines Mähdreschers vorzugsweise um einen Bruchkornsensor zur Ermittlung des Bruchkornanteils oder um einen Kornverlustsensor 17 zur Ermittlung des Anteils von auf dem Feld 1 abgeworfenen Korns. Bei dem Sensor 18, 19 zur Vorfeldüberwachung handelt es sich vorzugsweise um einen Gutfeuchtesensor 18 oder um einen Gutbestandsdichtesensor 19. Andere Sensoren sind bei der Erzeugung optimierter Maschinenparameter grundsätzlich anwendbar.

Im Einzelnen betreffen die optimierten Maschinenparameter vorzugsweise das Schneidwerk 10. Die Maschinenparameter repräsentieren dabei vorzugsweise die Schnitthöhe und/oder die Haspeldrehzahl. Alternativ oder zusätzlich ist es vorgesehen, dass die optimierten Maschinenparameter das Dreschwerk 12 betreffen und die Trommeldrehzahl und/oder die Korbweite repräsentieren. Weiter alternativ oder zusätzlich kann es vorgesehen sein, dass die optimierten Maschinenparameter die Trennvorrichtung 13 betreffen und Trennvorrichtungsparameter, insbesondere eine Siebweite der Trennvorrichtung 13, repräsentieren. Wiederum alternativ oder zusätzlich ist es vorzugsweise vorgesehen, dass die optimierten Maschinenparameter die Reinigungsvorrichtung 14 betreffen und die Siebweite von Ober- und/oder Untersieb und/oder die Gebläseleistung repräsentieren. Schließlich ist es alternativ oder zusätzlich vorzugsweise vorgesehen, dass die optimierten Maschinenparameter die Verteilvorrichtung 15 betreffen und Verteilvorrichtungsparameter, insbesondere Wurfrichtung und Wurfweite für den Strohanteil, repräsentieren. Andere Maschinenparameter sind für die vorschlagsgemäße Optimierung grundsätzlich denkbar.

Beispiele für die oben erwähnten Grenzwerteinstellungen können beispielsweise eine maximale Fahrgeschwindigkeit, eine maximale Motorauslastung oder eine maximale Schichthöhe sein.

Damit nicht jede Erntemaschine 3 - 7 des Verbunds 2 mit sämtlichen Sensoren 16 - 19 ausgestattet sein muss, ist es vorzugsweise so, dass die Optimierungsdaten, die von der Master-Erntemaschine 3 bereitgestellt werden, weiterhin Sensordaten der Master-Erntemaschine 3 umfassen. Oben wurden bereits Beispiele dieser Sensordaten genannt, vorzugsweise umfassen die Sensordaten zusätzlich oder alternativ Sensorkalibrationsdaten und/oder Sensorempfindlichkeiten und/oder Sensorgrenzwertdaten und/oder ganz allgemein Sensormesswerte. Eine eigene Bedeutung kommt hierbei dem Umstand zu, dass die Master-Erntemaschine 3, aufgrund ihrer besseren Ausstattung, zumeist besser in der Lage ist, Sensordaten zu kalibrieren, Fehlfunktionen von Sensoren zu erkennen, oder Abweichungen der Sensormesswerte zu identifizieren. Daher überträgt die Master-Erntemaschine 3 vorzugsweise die Sensorkalibrationsdaten, um die jeweiligen Messgenauigkeiten der Slave-Erntemaschinen 4 - 7 zu erhöhen.

Alternativ oder zusätzlich ist es möglich, fehlende Sensoren 16 - 19 der Slave-Erntemaschinen 4 - 7 zu ersetzen, vorzugsweise indem Pauschalwerte der Master-Erntemaschine 3 oder Sensorkorrekturfaktoren Teil der Optimierungsdaten sind. Dies kann zum Beispiel Verluste bei der Kornreinigung, Verluste bei der Kornabscheidung, Signale zum Körnerbruch, Signale zur Kornsauberkeit, Grenzwerte zum Überkehrvolumen und/oder eine Feuchtemessung betreffen.

Vorzugsweise umfassen die Optimierungsdaten, die von der Master-Erntemaschine 3 bereitgestellt werden, weiterhin Bestandsbedingungen des Feldbestands. Diese Bestandsbedingungen werden vorzugsweise der Master-Erntemaschine 3 von einem Benutzer, insbesondere dem Fahrer F, eingegeben und/oder von der Master-Erntemaschine 3 aus einer externen Datenquelle empfangen. Wenn diese Feldbedingungen von der Master-Erntemaschine 3 dem Verbund 2 bereitgestellt werden, erübrigt sind eine wiederholte Eingabe und/oder ein wiederholtes Empfangen aus der externen Quelle. Die Bestandsbedingungen können beispielsweise Satellitendaten, Kartendaten und/oder Wetterdaten umfassen. Alternativ oder zusätzlich können die Bestandsbedingungen von der Master-Erntemaschine 3 sensorisch ermittelt werden.

Die von der Master-Erntemaschine 3 bereitgestellten Optimierungsdaten können auch Daten zu Stopp-Aggregaten umfassen, das heißt zu Aggregaten, deren Einstellungen nicht aus einer Fahrerkabine der Erntemaschine verändert werden können, sondern im Stillstand angepasst werden müssen. Bei Abweichungen zwischen Zuständen der Stopp-Aggregate der Master-Erntemaschine 3 und zumindest einer Slave-Erntemaschine 4 - 7 wird vorzugsweise ein Benutzer, insbesondere einer der Fahrer F, gewarnt.

Ganz allgemein werden, wie bereits erwähnt, die optimierten Maschinenparameter vorzugsweise an die jeweilige Slave-Erntemaschine 4 - 7 angepasst. Es kann so sein, dass zumindest ein Teil der angepassten optimierten Maschinenparameter direkt zur Einstellung der jeweiligen Slave-Erntemaschine 4 - 7 genutzt wird. Zusätzlich oder alternativ ermittelt zumindest ein Teil der selbstoptimierenden Slave-Erntemaschinen 4 - 6 auf Basis der Optimierungsdaten mittels ihres Optimierungssystems 9 optimierte Maschinenparameter und stellt einen ersten Teil ihrer Arbeitsaggregate auf die ermittelten optimierten Maschinenparameter ein.

Genauso vorteilhaft kann es vorgesehen sein, dass zumindest ein Teil der selbstoptimierenden Slave-Erntemaschinen 4 - 6 einen zweiten Teil ihrer Arbeitsaggregate auf die von der Master-Erntemaschine empfangenen, optimierten Maschinenparameter einstellt, wobei vorzugsweise der erste Teil und der zweite Teil unterschiedliche Arbeitsaggregate betreffen.

Hier und vorzugsweise ist es so, dass mittels der Normierungsvorschriften die optimierten Maschinenparameter der Master-Erntemaschine 3 in korrespondierende optimierte Maschinenparameter der jeweiligen Slave-Erntemaschine 4 - 7 umgewandelt werden. Da die Normierungsvorschriften zum Teil aufwändig berechnet werden müssen, ist es vorzugsweise so, dass die Normierungsvorschriften bei Eintritt einer Erntemaschine in den Verbund 2 geladen oder erzeugt werden, insbesondere jedoch nicht während der Abarbeitung des Ernteprozesses regelmäßig neu berechnet werden müssen. Bei einem sukzessiven Eintritt einer gleichartigen, insbesondere derselben Erntemaschine in den Verbund werden die Normierungsvorschriften vorzugsweise zumindest teilweise wiederverwendet. Dabei kann es sich auch um ein Wiederherstellen des gleichen Verbunds zu einem späteren Zeitpunkt handeln. Vorzugsweise werden die Normierungsvorschriften daher auf der jeweiligen Erntemaschine und/oder einem Server gespeichert.

Die Normierungsroutine wird vorzugsweise von der Master-Erntemaschine 3, insbesondere dem Optimierungssystem 9 der Master-Erntemaschine 3, oder von der jeweiligen Slave-Erntemaschine 4 - 7, insbesondere dem Optimierungssystem 9 der jeweiligen Slave-Erntemaschine 4 - 6, durchgeführt.

Im einfachsten Fall handelt es sich bei der Normierungsvorschrift nur um das Hinzuaddieren eines Offsets zu einem Wert der Master-Erntemaschine 3. Alternativ könnte der Wert der Master-Erntemaschine 3 beispielsweise auch in einem prozentualen Wert umgerechnet werden und auf eine andere Skala der jeweiligen Slave-Erntemaschine 4 - 7 angepasst werden.

Die Benutzervorgaben umfassen vorzugsweise eine oder mehrere Zielvorgaben. Die Zielvorgaben betreffen vorzugsweise ein oder mehrere Qualitätsparameter aus der Gruppe umfassend Bruchkornanteil, Ausdrusch, Häckselqualität, Strohqualität, Kraftstoffverbrauch, Fahrgeschwindigkeit, Kornqualität, Kornsauberkeit, Fahrstrategie, Fruchtart, Entleerstrategie, Schichthöhe und/oder Schnitthöhe.

Die Parametereinstellungen betreffen vorzugsweise eine oder mehrere Einstellungen umfassend Einstellungen zu Schrägförderdrehzahl, Dreschtrommeldrehzahl, Dreschkorbabstand, Dreschtrommelreduziergetriebe, schwenkbares Dreschsegment, Entgrannerklappen, Gebläsedrehzahl, Obersiebweite, Untersiebweite, Siebtypen, Rotordrehzahl, Rotorleitblechverstellung, Rotorklappen, Gegenmesser-Häcksler, Reibleiste-Häcksler, Verteilbreite Strohverteiler, Häckslerdrehzahl.

Nach einer weiteren Lehre, der eigenständige Bedeutung zukommt, wird eine Erntemaschine, die vorzugsweise mit einem Optimierungssystem 9, insbesondere mit einem Fahrerassistenzsystem, ausgestaltet ist, zur Verwendung in einem vorschlagsgemäßen Verfahren beansprucht. Diese Erntemaschine wird vorzugsweise als Master-Erntemaschine 3 und/oder selbstoptimierende Erntemaschine und/oder Slave-Erntemaschine 4 - 7 verwendet. Auf alle Ausführungen zu dem vorschlagsgemäßen Verfahren, die geeignet sind, die Erntemaschine zu beschreiben, darf verwiesen werden.

### Bezugszeichenliste

- 1: Feld
- 2: Verbund
- 3: Master-Erntemaschine
- 4 - 6: Slave-Erntemaschine mit Optimierungssystem
- 7: Slave-Erntemaschine ohne Optimierungssystem
- 8: Datennetzwerk
- 9: Fahrerassistenzsystem
- 10: Schneidwerk
- 11: Schrägförderer
- 12: Dreschwerk
- 13: Trennvorrichtung
- 14: Reinigungsvorrichtung
- 15: Verteilvorrichtung
- 16: Bruchkornsensor
- 17: Kornverlustsensor
- 18: Gutfeuchtesensor
- 19: Gutbestandsdichtesensor
- F: Fahrer

## Patentansprüche

1. Verfahren zur Abarbeitung eines landwirtschaftlichen Ernteprozesses auf einem Feld (1) mittels eines Verbunds (2) aus landwirtschaftlichen Erntemaschinen (3 - 7), wobei die Erntemaschinen (3 - 7) des Verbunds (2) jeweils Erntegut verarbeitende Arbeitsaggregate aufweisen, die zur Anpassung an die jeweiligen Erntebedingungen mit Maschinenparametern einstellbar sind, wobei die Erntemaschinen (3 - 7) des Verbunds (2) über ein drahtloses Datennetzwerk (8) miteinander kommunizieren,
wobei zumindest eine Master-Erntemaschine (3) des Verbunds (2) als selbstoptimierende Erntemaschine ausgestaltet ist, die ein, ein Fahrerassistenzsystem umfassendes, Optimierungssystem (9) zur automatisierten Erzeugung von hinsichtlich ihrer Erntegutverarbeitung optimierten Maschinenparametern aufweist,
**dadurch gekennzeichnet,**
**dass** von der Master-Erntemaschine (3) Optimierungsdaten, die Benutzervorgaben und/oder Parametereinstellungen umfassen, und auf Basis der Optimierungsdaten vom Optimierungssystem erzeugte optimierte Maschinenparameter über das Datennetzwerk (8) bereitgestellt und von Slave-Erntemaschinen (4 - 7) des Verbunds (2) empfangen werden und in einer Normierungsroutine basierend auf Normierungsvorschriften zumindest die optimierten Maschinenparameter an die jeweilige Slave-Erntemaschine (4 - 7) angepasst werden.

2. Verfahren nach Anspruch 1, **dadurch gekennzeichnet, dass** die Optimierungsdaten und/oder die optimierten Maschinenparameter durch das Optimierungssystem der jeweiligen Slave-Erntemaschine (4 - 6) und/oder durch das Optimierungssystem der Master-Erntemaschine (3) auf Basis weiterer Optimierungsdaten der jeweiligen Slave-Erntemaschine (4 - 7), insbesondere auf Basis von Grenzwerten für Betriebsbedingungen der Slave-Erntemaschine (4 - 7), auf Plausibilität überprüft werden, vorzugsweise, dass bei fehlender Plausibilität einem Fahrer (F) der jeweiligen Slave-Erntemaschine (4 - 7) und/oder einem Fahrer (F) der Master-Erntemaschine (3) die fehlende Plausibilität angezeigt wird und der Fahrer (F) eine Einstellung der jeweiligen Arbeitsaggregate basierend auf den unplausiblen optimierten Maschinenparametern bestätigen oder ablehnen kann.

3. Verfahren nach einem der vorhergehenden Ansprüche, **dadurch gekennzeichnet, dass** zumindest die Optimierungssysteme (9) zweier der selbstoptimierenden Erntemaschinen (3 - 6) des Verbunds eine unterschiedliche Wertigkeit bezüglich ihrer Ausstattung aufweisen, wobei das Optimierungssystem (9) der Master-Erntemaschine (3) die höchste Wertigkeit aufweist, vorzugsweise, dass das Optimierungssystem (9) zumindest einer Slave-Erntemaschine (4 - 7) mit Optimierungssystem (9) kein Fahrerassistenzsystem aufweist.

4. Verfahren nach Anspruch 3, **dadurch gekennzeichnet, dass** die jeweiligen Optimierungssysteme (9) der selbstoptimierenden Erntemaschinen (3 - 6) modular aufgebaut sind, vorzugsweise, dass die Optimierungssysteme (9) der selbstoptimierenden Erntemaschinen (3 - 6) ein Fahrerassistenzsystem als übergeordnetes Modul und untergeordnete Sub-Module aufweisen können, weiter vorzugsweise, dass die Wertigkeit des jeweiligen Optimierungssystems (9) basierend auf einer Anzahl an Modulen des jeweiligen Optimierungssystem (9) bestimmt wird und/oder ein Optimierungssystem (9), das ein Fahrerassistenzsystem aufweist, eine höhere Wertigkeit aufweist, als ein Optimierungssystem (9), das kein Fahrerassistenzsystem aufweist.

5. Verfahren nach einem der vorhergehenden Ansprüche, **dadurch gekennzeichnet, dass** die Parametereinstellungen Grenzwerteinstellungen und/oder Einstellungen für eine Gutflusskontrolle und/oder eine Fahrgeschwindigkeitsregelung und/oder ein Häcksel- und Verteilsystem und/oder ein Spurführungssystem umfassen, und/oder, dass die Benutzervorgaben Einstellungen des Fahrerassistenzsystems umfassen, vorzugsweise, dass das Fahrerassistenzsystem aus den Benutzervorgaben abgeleitete Benutzereinstellungen ermittelt, weiter vorzugsweise, dass die abgeleiteten Benutzereinstellungen die Sub-Module betreffen.

6. Verfahren nach einem der vorhergehenden Ansprüche, **dadurch gekennzeichnet, dass** die Optimierungsdaten, die von der Master-Erntemaschine (3) bereitgestellt werden, weiterhin Sensordaten der Master-Erntemaschine (3) umfassen, vorzugsweise, dass die Sensordaten Sensorkalibrationsdaten und/oder Sensorempfindlichkeiten und/oder Sensorgrenzwertdaten und/oder Sensormesswerte umfassen.

7. Verfahren nach einem der vorhergehenden Ansprüche, **dadurch gekennzeichnet, dass** die Optimierungsdaten, die von der Master-Erntemaschine (3) bereitgestellt werden, weiterhin Bestandsbedingungen des Feldbestands umfassen, vorzugsweise, dass die Bestandsbedingungen der Master-Erntemaschine (3) von einem Benutzer eingegeben und/oder von der Master-Erntemaschine (3) aus einer externen Datenquelle empfangen werden und/oder von der Master-Erntemaschine (3) sensorisch ermittelt werden.

8. Verfahren nach einem der Ansprüche 2 bis 7, **dadurch gekennzeichnet, dass** mittels der Normierungsvorschriften die optimierten Maschinenparameter der Master-Erntemaschine (3) in korrespondierende optimierte Maschinenparameter der jeweiligen Slave-Erntemaschine (4 - 7) umgewandelt werden, vorzugsweise, dass die Normierungsvorschriften bei Eintritt einer Erntemaschine in den Verbund (2) geladen oder erzeugt werden und weiter vorzugsweise bei einem sukzessiven Eintritt einer gleichartigen, insbesondere derselben, Erntemaschine in den Verbund (2) zumindest teilweise wiederverwendet werden.

9. Verfahren nach einem der Ansprüche 2 bis 8, **dadurch gekennzeichnet, dass** die Normierungsroutine von der Master-Erntemaschine (3), dem Optimierungssystem (9) der Master-Erntemaschine (3), oder von der jeweiligen Slave-Erntemaschine (4 - 7), dem Optimierungssystem (9) der jeweiligen Slave-Erntemaschine (4 - 6), durchgeführt wird.

10. Verfahren nach einem der vorhergehenden Ansprüche, **dadurch gekennzeichnet, dass** die Benutzervorgaben eine oder mehrere Ziel-Vorgaben umfassen, betreffend ein oder mehrere Qualitätsparameter aus der Gruppe umfassend Bruchkornanteil, Ausdrusch, Häckselqualität, Stroh-Qualität, Kraftstoffverbrauch, Fahrgeschwindigkeit, Korn-Qualität, Korn-Sauberkeit, Fahrstrategie, Fruchtart, Entleerstrategie, Schichthöhe und/oder Schnitthöhe.

11. Verfahren nach einem der vorhergehenden Ansprüche, **dadurch gekennzeichnet, dass** ein oder mehrere Parametereinstellungen gewählt sind aus der Gruppe umfassend Einstellungen zu Schrägförderdrehzahl, Dreschtrommeldrehzahl, Dreschkorbabstand, Dreschtrommelreduziergetriebe, schwenkbares Dreschsegment, Entgrannerklappen, Gebläsedrehzahl, Obersiebweite, Untersiebweite, Siebtypen, Rotordrehzahl, Rotorleitblechverstellung, Rotorklappen, Gegenmesser-Häcksler, Reibleiste-Häcksler, Verteilbreite Strohverteiler, Häckslerdrehzahl.

12. Erntemaschine, ausgestaltet zur Verwendung in einem Verfahren nach Anspruch 1 als Master-Erntemaschine (3) und/oder Slave-Erntemaschine (4 - 6).

## Claims

1. Method for executing an agricultural harvesting process on a field (1) by means of a network (2) of agricultural harvesting machines (3 - 7), wherein the harvesting machines (3 - 7) of the network (2) each have crop-processing working units which are adjustable with machine parameters for adaptation to the respective harvesting conditions, wherein the harvesting machines (3 - 7) of the network (2) communicate with one another via a wireless data network (8),
wherein at least one master harvesting machine (3) of the network (2) is designed as a self-optimising harvesting machine which has an optimisation system (9) comprising a driver assistance system for the automated generation of machine parameters optimised with regard to its crop processing,
**characterised in that**
**in that** optimisation data comprising user specifications and/or parameter settings are provided by the master harvesting machine (3) and optimised machine parameters generated by the optimisation system on the basis of the optimisation data are provided via the data network (8) and received by slave harvesting machines (4 - 7) of the network (2), and wherein at least the optimised machine parameters are adapted to the respective slave harvesting machine (4 - 7) in a standardisation routine based on standardisation rules.

2. Method according to claim 1, **characterised in that** the optimisation data and/or the optimised machine parameters are checked for plausibility by the optimisation system of the respective slave harvesting machine (4 - 6) and/or by the optimisation system of the master harvesting machine (3) on the basis of further optimisation data of the respective slave harvesting machine (4 - 7), in particular on the basis of limit values for operating conditions of the slave harvesting machine (4 - 7), are checked for plausibility, preferably so that if plausibility is lacking, the lack of plausibility is displayed to an operator (F) of the respective slave harvesting machine (4 - 7) and/or an operator (F) of the master harvesting machine (3) and the operator (F) can confirm or reject an adjustment of the respective working units based on the implausible optimised machine parameters.

3. Method according to one of the preceding claims, **characterised in that** at least the optimisation systems (9) of two of the self-optimising harvesting machines (3 - 6) of the combination have a different value with regard to their equipment, the optimisation system (9) of the master harvesting machine (3) having the highest value, preferably **in that** the optimisation system (9) of at least one slave harvesting machine (4 - 7) with optimisation system (9) has no driver assistance system.

4. Method according to claim 3, **characterised in that** the respective optimisation systems (9) of the self-optimising harvesting machines (3 - 6) have a modular structure, preferably **in that** the optimisation systems (9) of the self-optimising harvesting machines (3 - 6) can have a driver assistance system as a superordinate module and subordinate sub-modules, further preferably that the value of the respective optimisation system (9) is determined based on a number of modules of the respective optimisation system (9) and/or an optimisation system (9) which has a driver assistance system has a higher value than an optimisation system (9) which does not have a driver assistance system.

5. Method according to one of the preceding claims, **characterised in that** the parameter settings comprise limit value settings and/or settings for a crop flow control and/or a driving speed control and/or a chopping and distribution system and/or a lane guidance system, and/or **in that** the user specifications comprise settings of the driver assistance system, preferably **in that** the driver assistance system determines user settings derived from the user specifications, further preferably **in that** the derived user settings relate to the sub-modules.

6. Method according to one of the preceding claims, **characterised in that** the optimisation data provided by the master harvesting machine (3) further comprises sensor data of the master harvesting machine (3), preferably **in that** the sensor data comprises sensor calibration data and/or sensor sensitivities and/or sensor limit data and/or sensor measured values.

7. Method according to one of the preceding claims, **characterised in that** the optimisation data provided by the master harvesting machine (3) further comprises crop conditions of the field crop, preferably **in that** the crop conditions of the master harvesting machine (3) are entered by a user and/or are received by the master harvesting machine (3) from an external data source and/or are determined by the master harvesting machine (3) by sensors.

8. Method according to one of claims 2 to 7, **characterised in that** the optimised machine parameters of the master harvesting machine (3) are converted into corresponding optimised machine parameters of the respective slave harvesting machine (4 - 7) by means of the standardisation rules, preferably **in that** the standardisation rules are loaded or generated when a harvesting machine enters the network (2) and are further preferably at least partially reused when a similar, in particular the same, harvesting machine successively enters the network (2).

9. Method according to one of claims 2 to 8, **characterised in that** the standardisation routine is carried out by the master harvesting machine (3), the optimisation system (9) of the master harvesting machine (3), or by the respective slave harvesting machine (4 - 7), the optimisation system (9) of the respective slave harvesting machine (4 - 6).

10. Method according to one of the preceding claims, **characterised in that** the user specifications comprise one or more target specifications relating to one or more quality parameters from the group comprising broken grain content, threshing, chopping quality, straw quality, fuel consumption, driving speed, grain quality, grain cleanliness, driving strategy, crop type, emptying strategy, layer height and/or cutting height.

11. Method according to one of the preceding claims, **characterised in that** one or more parameter settings are selected from the group comprising settings for inclined conveyor speed, threshing drum speed, threshing concave spacing, threshing drum reduction gear, swivelling threshing segment, deawning flaps, blower fan speed, top sieve width, bottom sieve width, sieve types, rotor speed, rotor guide plate adjustment, rotor flaps, counter-blade chopper, friction bar chopper, straw distributor distribution width, chopper speed.

12. Harvesting machine designed for use in a method according to claim 1 as a master harvesting machine (3) and/or slave harvesting machine (4 - 6).

## Revendications

1. Procédé pour exécuter un processus de récolte agricole dans un champ (1) à l'aide d'un ensemble (2) de machines de récolte agricoles (3 à 7), les machines de récolte (3 à 7) de l'ensemble (2) présentant chacune des unités de travail qui traitent chacune des produits récoltés et qui peuvent être réglées avec des paramètres de machine en vue de l'adaptation aux conditions de récolte respectives, les machines de récolte (3 à 7) de l'ensemble (2) communiquant entre elles par l'intermédiaire d'un réseau de données sans fil (8),
au moins une machine de récolte maître (3) de l'ensemble (2) étant agencée comme machine de récolte à auto-optimisation, qui présente un système d'optimisation (9) comprenant un système d'assistance au conducteur et destiné à la génération automatisée de paramètres de machine optimisés quant à leur traitement de la récolte,
**caractérisé en ce que**
des données d'optimisation, comportant des consignes définies par l'utilisateur et/ou des réglages de paramètres, et des paramètres de machine optimisés, générés par le système d'optimisation sur la base des données d'optimisation, sont fournis par la machine de récolte maître (3), par l'intermédiaire du réseau de données (8), et sont reçus par des machines de récolte esclaves (4 à 7) de l'ensemble (2), et au moins les paramètres de machine optimisés sont adaptés à la machine de récolte esclave (4 à 7) respective, dans une routine de normalisation basée sur des prescription de normalisation.

2. Procédé selon la revendication 1, **caractérisé en ce que** les données d'optimisation et/ou les paramètres de machine optimisés sont vérifiés quant à leur plausibilité par le système d'optimisation de la machine de récolte esclave (4 à 6) respective et/ou par le système d'optimisation de la machine de récolte maître (3), sur la base d'autres données d'optimisation de la machine de récolte esclave (4 à 7) respective, notamment sur la base de valeurs limites pour les conditions de fonctionnement de la machine de récolte esclave (4 à 7), de préférence qu'en l'absence de plausibilité, cette absence de plausibilité est indiquée à un conducteur (F) de la machine de récolte esclave (4 à 7) respective et/ou à un conducteur (F) de la machine de récolte maître (3), et le conducteur (F) peut confirmer ou refuser un réglage des unités de travail respectives sur la base des paramètres de machine optimisés non plausibles.

3. Procédé selon l'une des revendications précédentes, **caractérisé en ce qu'**au moins les systèmes d'optimisation (9) de deux des machines de récolte (3 à 6) à auto-optimisation de l'ensemble présentent des niveaux de valeur différents en ce qui concerne leur équipement, où le système d'optimisation (9) de la machine de récolte maître (3) présente le niveau de valeur le plus élevé, de préférence que le système d'optimisation (9) d'au moins une machine de récolte esclave (4 à 7) à système d'optimisation (9) ne présente pas de système d'assistance au conducteur.

4. Procédé selon la revendication 3, **caractérisé en ce que** les systèmes d'optimisation (9) respectifs des machines de récolte (3 à 6) à auto-optimisation ont une structure modulaire, de préférence que les systèmes d'optimisation (9) des machines de récolte (3 à 6) à auto-optimisation peuvent présenter un système d'assistance au conducteur en tant que module de niveau supérieur et des sous-modules de niveau inférieur, en outre de préférence que le niveau de valeur du système d'optimisation (9) respectif est déterminé sur la base d'un nombre de modules du système d'optimisation (9) respectif et/ou un système d'optimisation (9), qui comporte un système d'assistance au conducteur, présente un niveau de valeur plus élevé qu'un système d'optimisation (9) ne comportant pas de système d'assistance au conducteur (4).

5. Procédé selon l'une des revendications précédentes, **caractérisé en ce que** les réglages de paramètres comprennent des réglages de valeurs limites et/ou des réglages en vue d'un contrôle du flux des matières et/ou une régulation de la vitesse de déplacement et/ou un système de hachage et de répartition et/ou un système de guidage de voie, et/ou que les consignes de l'utilisateur comprennent des réglages du système d'assistance au conducteur, de préférence que le système d'assistance au conducteur détermine des réglages utilisateur déduits des consignes de l'utilisateur, et par ailleurs, de préférence que les réglages utilisateur déduits concernent les sous-modules.

6. Procédé selon l'une des revendications précédentes, **caractérisé en ce que** les données d'optimisation fournies par la machine de récolte maître (3) comprennent en outre des données de capteur de la machine de récolte maître (3), de préférence que les données de capteur comprennent des données d'étalonnage de capteur et/ou des sensibilités de capteur et/ou des données de valeurs limites de capteur et/ou des valeurs de mesure de capteur.

7. Procédé selon l'une des revendications précédentes, **caractérisé en ce que** les données d'optimisation fournies par la machine de récolte maître (3) comprennent en outre des conditions de culture du champ, de préférence que les conditions de culture sont saisies dans la machine de récolte maître (3) par un utilisateur et/ou sont reçues par la machine de récolte maître (3) en provenance d'une source de données externe et/ou sont déterminées par la machine de récolte maître (3) au moyen de capteurs.

8. Procédé selon l'une des revendications 2 à 7, **caractérisé en ce que** les paramètres de machine optimisés de la machine de récolte maître (3) sont convertis au moyen des prescriptions de normalisation en paramètres de machine optimisés correspondants de la machine de récolte esclave (4 à 7) respective, de préférence que les prescriptions de normalisation sont chargées ou générées lors de l'entrée d'une machine de récolte dans l'ensemble (2) et sont par ailleurs de préférence réutilisées au moins en partie lors d'une entrée subséquente d'une machine de récolte de même type, notamment de la même machine, dans l'ensemble (2).

9. Procédé selon l'une des revendications 2 à 8, **caractérisé en ce que** la routine de normalisation est exécutée par la machine de récolte maître (3), le système d'optimisation (9) de la machine de récolte maître (3) ou par la machine de récolte esclave (4 à 7) respective, le système d'optimisation (9) de la machine de récolte esclave (4 à 6) respective.

10. Procédé selon l'une des revendications précédentes, **caractérisé en ce que** les consignes de l'utilisateur comprennent un ou plusieurs objectifs visés concernant un ou plusieurs paramètres de qualité du groupe comprenant la proportion de grains cassés, le battage, la qualité de hachage, la qualité de la paille, la consommation de carburant, la vitesse d'avancement, la qualité des grains, la propreté du grain, la stratégie de conduite, le type de culture, la stratégie de vidange, la hauteur de couche et/ou la hauteur de coupe.

11. Procédé selon l'une des revendications précédentes, **caractérisé en ce qu'**un ou plusieurs réglages de paramètres sont sélectionnés dans le groupe comprenant des réglages de la vitesse de rotation du convoyeur incliné, la vitesse de rotation du batteur, l'écartement du contre-batteur, le réducteur de vitesse du batteur, le segment de battage pivotant, les volets de l'ébarbeur, la vitesse de rotation de la soufflerie, l'écartement de la grille supérieure, l'écartement de la grille inférieure, types de grilles, vitesse du rotor, déplacement de la tôle du rotor, volets du rotor, hacheur à contrecouteaux, hacheur à barre de friction, largeur de répartition du distributeur de paille, vitesse de rotation du hacheur.

12. Machine de récolte agencée en vue d'une utilisation dans un procédé selon la revendication 1, en tant que machine de récolte maître (3) et/ou machine de récolte esclave (4 à 6).
